# EUROPEAN PATENT SPECIFICATION

(11) **EP 3 434 403 B1**
(45) Date of publication and mention of the grant of the patent: **26.02.2020**
(21) Application number: 17183824.6
(22) Date of filing: 28.07.2017
(51) Int. Cl.: B23D 47/02, B27B 5/10, B25H 1/14

(54) **WORKSTATION**
ARBEITSSTATION
STATION DE TRAVAIL

(43) Date of publication of application: 30.01.2019
(73) Proprietor: Armorgard Limited, Fareham Industrial Park Fareham PO16 8XB (GB)
(72) Inventor: Horner, Liam, Fareham, Hampshire PO16 9SF (GB); Partridge, Matthew, Fareham, Hampshire PO16 9SF (GB)
(74) Representative: Worthington, Richard Easton

(56) References cited:
- WO-A1-2013/078162
- DE-U1- 8 601 410
- DE-U1- 8 802 419
- JP-A- H03 140 539
- US-A- 5 951 129
- US-B1- 6 948 539

## Description

### FIELD OF THE INVENTION

The present invention relates to a mobile workstation, e.g. for use in cutting a workpiece. Such a mobile workstation, according to the preamble of claim 1, is disclosed in DE8601410 U1.

### BACKGROUND OF THE INVENTION

A cutting workstation station is a designated area for cutting a workpiece such as a metal beam or a wooden plank. A mobile workstation allows the user to transfer the workstation to different construction locations. Mobile workstations may not be able to move in many construction sites due to their size. The size of the workstation also restricts the available number of cutting tools that can be used in the workstation.

Optimising a mobile workstation can lead to more flexibility in accessing different locations and enabling a greater variety of tools to be used.

### SUMMARY OF THE INVENTION

A first aspect of the invention provides a mobile workstation comprising:
a work-surface for mounting a cutting tool;
a cabinet at least partially surrounding the work-surface and having a back wall so as to define a cutting zone having a depth; and
an expandable portion having an expanded and a non-expanded configuration and comprising at least part of the back wall and at least part of the work-surface, the expandable portion is movable so as to vary the depth of the cutting zone.

The expandable portion of the mobile workstation increases the available space in the cutting zone to accommodate a larger cutting tool such as a chop saw or a mitre saw.

The expandable portion of the mobile workstation also provides an additional benefit. When in the non-expanded configuration, the depth of the cutting zone may be less than the width of standard doorways. In one example the depth of the cutting zone in the non-expanded configuration is less than or equal to 82 cm. In another example the depth of the cutting zone in the non-expanded configuration is less than or equal to 77.9 cm. In another example the depth of the cutting zone in the non-expanded configuration is between 72 cm and 82 cm. Therefore, the workstation can fit through doorways. This provides a workstation which is sufficiently small to be moved through constrained spaces such as doorways in the non-expanded configuration yet allows larger cutting tools to be used that would otherwise not be accommodated without the expandable portion.

The expandable part of the back wall and the expandable part of the work-surface may be coupled to move together. With such an arrangement gaps between the expandable part of the back wall and the expandable part of the work-surface are eliminated or covered. Therefore the expandable part can provide a cutting zone which offers noise cancellation and absorption benefits, and does not allow dust or swarf from the cutting operation to escape.

The expandable part of the work-surface may be arranged in sliding configuration with the non-expandable part of the work-surface. With such an arrangement the depth of work-surface is arranged to vary.

The expandable part of the back wall may be pivotably coupled to the non-expandable part of the back wall. With such an arrangement the angle between the expandable part of the back wall and the non-expandable part of the back wall can be modified to enable the depth of the cutting zone to vary.

Such variations in the expandable part of the work-surface and/or the expandable part of the back wall allow the workstation to move through small spaces when in the non-expanded configuration and also enables bigger tools to be used when in the expanded configuration.

The expandable portion may include sidewalls connecting between the expandable part of the back wall and the expandable part of the work-surface. With such an arrangement the sides of the expandable portion provide an enclosed cutting zone which offers noise cancellation and absorption benefits, and does not allow dust or swarf from the cutting operation to escape when the expandable portion is in the expanded configuration.

The workstation may further comprise one or more stop members to limit the movement of the expandable portion.

The expandable portion may include one or more guide members to coordinate movement of the expandable part of the back wall and the expandable part of the work-surface between the expanded and non-expanded configurations. The one or more guide members ensure that the expandable part of the back wall and the expandable part of the work-surface are constrained for movement along a predetermined path. Therefore the parts are not movable in a direction other than an intended direction of movement or beyond their limits.

The guide member may comprise a pin movable within a slot. In one example, the pin may be a male-female screw coupled to the expandable part of the work-surface and the slot may be arranged on the expandable part of the back wall.

In some examples, the expandable portion may comprise a handle connected to a lever. The lever may be connected to the pin. With such an arrangement movement of the expandable part can be easily controlled by a user.

The expandable portion may further comprise a nested insert having an opening towards the cutting zone. The nested insert provides an area for swarf collection. The nested insert also offers increased reinforcement of the back wall of the cutting zone.

The nested insert may have an inclined back wall which sits against the expandable part of the back wall when in the expanded configuration and which may form a gap with the expandable part of the back wall when in the non-expanded configuration. The inclined back wall of the nested insert provides support to the expandable part of the back wall when in the expanded configuration. When in the expanded configuration, the inclined back wall of the nested insert supports part of the weight of the expandable part of the back wall and therefore stops the expandable part of the back wall moving inadvertently to the non-expanded configuration.

The nested insert may have a base which rests upon the expandable part of the work-surface. Such an arrangement enables the nested insert to be movable with the expandable portion and also offers reinforcement of the cutting zone.

The expandable portion may further comprise a swarf disposal aperture. The swarf disposal aperture allows dust or swarf from the cutting operation to be easily disposed of from the work-surface.

The nested insert may further comprise a second swarf disposal aperture which is located in the swarf disposal aperture in the expandable part of the work-surface. Such an arrangement enables the swarf to be safely disposed both through the nested insert and the expandable part of the work-surface.

The depth of the cutting zone may increase by up to 30% between the non-expanded and the expanded configurations.

A workstation may further comprise lockable castor wheels. The lockable castor wheels make the workstation mobile and enable the user to move and use the workstation in different locations.

The workstation may be a cutting-tool workstation.

A further aspect of the invention provides a workstation supporting arm for a mobile cutting workstation, the supporting arm comprises:
a reconfigurable head for supporting a workpiece having a longitudinal axis, the reconfigurable head having a plurality of tools that can be arranged to provide at least two configurations for supporting the workpiece;
an attachment structure for attaching the supporting arm to a workstation;
wherein the head has a rotation axis to enable rotary selection of one of the plurality of tools and the tools comprise at least two of: a roller to enable substantially friction free movement of the workpiece along the workpiece longitudinal axis, a stop to block movement of the workpiece along the workpiece longitudinal axis, a notched surface to provide lateral support to the workpiece transverse to the longitudinal axis and a substantially planar surface to support the workpiece.

Such an arrangement allows different degrees of freedom of movement of the workpiece at the workstation before and/or during a cutting operation. The reconfigurable head eliminates or significantly reduces the need for separate tools to be fitted and removed from the workstation when a different configuration or a different tool is required to support the workpiece. The head rotation axis allows to easily change between different configurations by switching between the tools that rotate around the rotation axis.

The head may further comprise a fixing member to engage one or more of the tools in a position. This ensures that one or more of the tools can be securely engaged at a position that would serve at least one of the configurations.

The substantially planar workpiece support surface may comprise a friction surface. If a user applies a force that overcomes the friction between the friction surface and the workpiece, the user can change the workpiece position. The friction provide by the friction surface may be selected according to user requirements.

The tool may be selected according to the shape of different workpieces. For example, a workpiece formed from a square tube of material can be supported by the substantially planar surface. A workpiece formed from a circular tube of material can be supported by the notched surface, e.g. having a supporting shoulder.

The attachment structure may engage with an adjustment structure on the workstation to adjust the head position relative to the workstation. The adjustment structure may have a handle or other mechanism to release the head for movement relative to the workstation and to fix the position of the head relative to the workstation so as to vary the distance between the arm and workstation. One of the handles may adjust a height of the arm in relationship to the workstation. Such an arrangement allows the workstation to be situated on any ground without the need to be level in order to provide a suitable cutting plane.

The workstation supporting arm can be utilized in any mobile cutting workstation having a work-surface and a cabinet to at least partially surround the work-surface to define a cutting-zone.

### BRIEF DESCRIPTION OF THE DRAWINGS

Embodiments of the invention will now be described with reference to the accompanying drawings, in which:
Figures 1a and 1b are perspective views of a mobile workstation in a non-expanded configuration;
Figures 2a and 2b are perspective views of the mobile workstation in an expanded configuration;
Figures 3a and 3b are perspective views of an expandable portion of the mobile workstation in the expanded configuration;
Figure 4 is an exploded view of the expandable portion;
Figure 5a is a perspective view of a supporting arm and Figure 5b is a perspective view of the supporting arm supporting a workpiece; and
Figures 6a, 6b and 6c are perspective views of different configurations of the supporting arm.

### DETAILED DESCRIPTION OF EMBODIMENT(S)

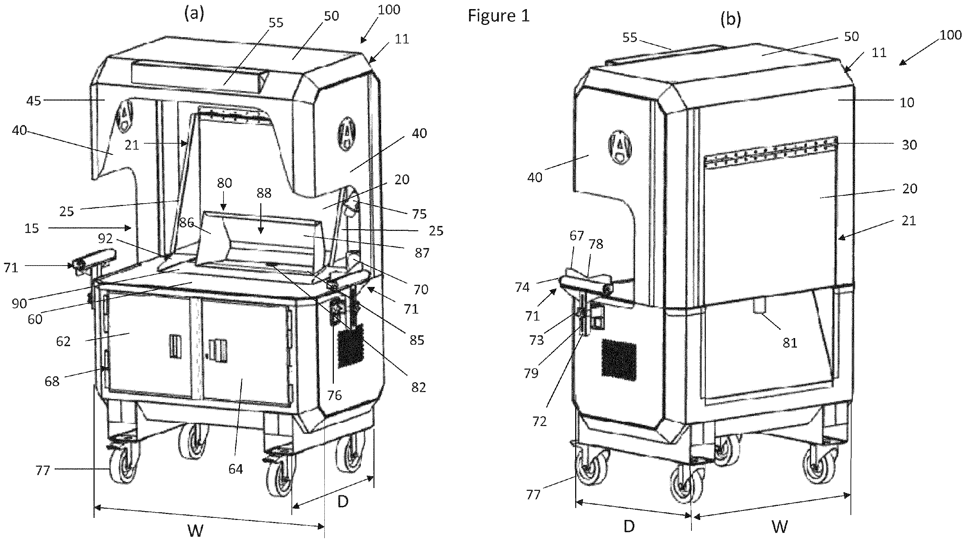

Figures 1a and 1b present an embodiment of a mobile workstation 100 in a non-expanded configuration. The mobile workstation 100 has a work-surface 60 and a cabinet 11 enclosing a cutting zone 15 for cutting workpieces such as metal beams or wooden planks. A cutting tool such as a chop saw or a mitre saw can be mounted on the work-surface 60 to perform cutting operations. The work-surface 60 is covered by an anti-static rubber mat to reduce hard-arm vibration during the cutting operation. The cutting zone 15 has a width W and a depth D. The width W of the cutting zone is between 104 cm and 124 cm. In the non-expanded configuration the depth D is less than a standard doorway width). In one embodiment the depth D of the cutting zone 15 in the non-expanded configuration is less than or equal to 82 cm. In another embodiment the depth D of the cutting zone 15 in the non-expanded configuration is less than or equal to 77.9 cm. In another embodiment the depth D of the cutting zone in the non-expanded configuration is between 72 cm and 82 cm. The mobile workstation 100 has four lockable castor wheels 77 that enable movement of the workstation to different locations.

The cabinet 11 has a back wall 10, cabinet sidewalls 40, a front cover 45, a cabinet roof 50 and a modesty panel 55. The modesty panel 55 provides locators and cover over fastenings (not shown) which are used to attach a light housing (not shown) which is internal to the unit. In some embodiments the back wall 10, the cabinet sidewalls 40, the front cover 45 and the cabinet roof 50 have their sides facing towards the cutting zone 15 covered by sound deadening foam to reduce noise pollution. In some embodiments the cabinet 11 may also comprise PVC curtains to reduce noise and contain debris and sparks flying away from the cutting zone 15. The curtains may be adapted at the cabinet sidewalls and/or the front cover 45.

A security cabinet 68, positioned beneath the work-surface 60, has a first door 62 and a second door 64 to provide access inside the security cabinet 68. The security cabinet 68 can be used to store tools and fittings.

The mobile workstation 100 has an expandable portion 21 to enable expansion of cutting zone 15 depth D and allow large cutting tools to be used. The expandable portion 21 has an expandable back wall part 20, expandable sidewall parts 25, an expandable work-surface part 90, expandable work-surface sidewall parts 92 and a nested insert 80. The expandable work-surface part 90 is arranged to slide on the work-surface 60 to vary the depth D of the cutting zone 15. The expandable back wall part 20 pivotably couples to the non-expandable part of the back wall 10 through a hinge 30. In this embodiment the hinge 30 is a piano hinge.

The hinge 30 couples to the expandable back wall part 20 and to the non-expandable part of the back wall 10.

The nested insert 80 has a nested insert base 85, a nested insert back wall 87, nested insert sidewalls 86, a nested insert opening 88 towards the cutting zone 15, a swarf disposal aperture 82 and a nested insert swarf disposal tube 81. The swarf disposal aperture 82 allows swarf to be disposed of through the nested insert swarf disposal tube 81 into a suitable container placed below (not shown).

The mobile workstation 100 is made from subassemblies comprising folded panels which slot into each other to improve strength.

The mobile workstation 100 has a side light source 75, one or more sockets 70,two workpiece supporting arms 71 and a light switch (not visible in the figure). The side light source 75 is positioned so that a light beam angle is in a direction that would not cast a shadow upon a user of the workstation. The socket 70 provides 110V power supply. The socket 70 is used for plugging in tools and equipment and is positioned so as to provide improved safety and access to the user.

Each of the supporting arms 71 is extendable along the width W of the workstation 100 to accommodate handling different lengths of workpieces for the cutting operation. Each of the supporting arms 71 has adjustable height to adjust to different tools used in the cutting operation. The adjustable height of the supporting arms 71 can also accommodate any unevenness on surfaces that the workstation is located. Each of the supporting arms 71 comprises a first tube with a fist channel, not visible in the figure, passing below the work-surface 60 along the width W of the workstation. Each of the supporting arms 71 also comprises a second tube 72 having a second channel 79.

Each of the supporting arms 71 has a first rotatable handle 76 to adjust the supporting arm 71 extension along the width W of the workstation 100. The first rotatable handle 76 is movable between different positions within the first channel of the first tube. The user rotates the first rotatable handle 76 to vary the distance between the work-surface 60 and the supporting arm 71 and extend the first tube along the width W of the workstation 100.

The height of each of the supporting arms 71 is adjustable by a second rotatable handle 73. The second rotatable handle 73 is movable between different positions within the second channel 79 of the second tube 72. The user rotates the handle 73 to adjust the height of the tube 72, and thus the height of the supporting arm 71. In this embodiment a rack and pinion mechanism are used for both the first rotatable handle 76 and the second rotatable handle 73. However different embodiments may employ different mechanisms for extension and height adjustment of each supporting arm 71.

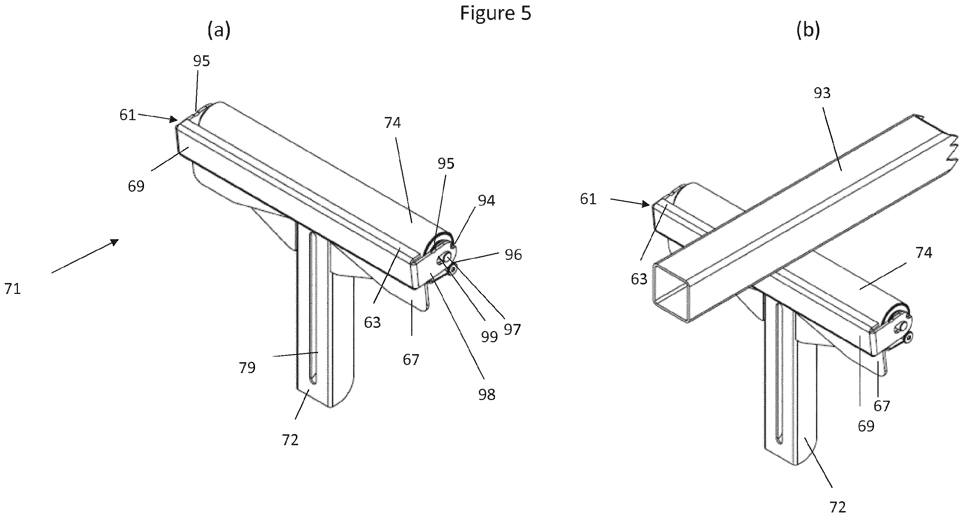

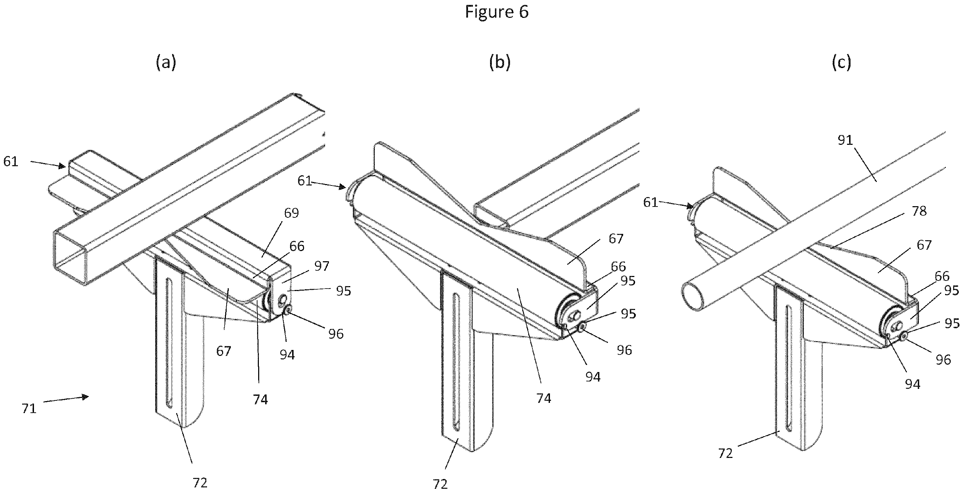

Each of the supporting arms 71 have tools such as a roller 74, a blade 67, a substantially planar support surface 66 or a notched support surface having support shoulder 78 to support workpieces in different ways. A detailed description of the support structures follows in relation to Figures 5 and 6.

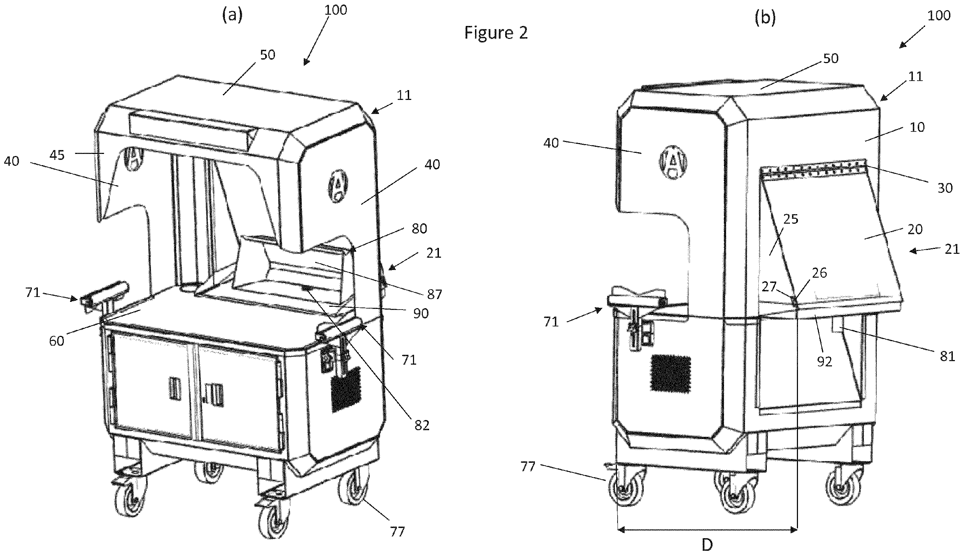

Figures 2a and 2b show the mobile workstation 100 at an expanded configuration. To increase the depth D of the cutting zone the expandable work-surface part 90 slides on the work-surface 60, while the expandable back wall part 20 pivots around the non-expandable part of the back wall 10. This increases the depth D of the cutting zone 15 by up to 30% compared to the non-expanded configuration described in Figures 1a and 1b. This arrangement provides more space for large cutting tools such as chop saws and mitre saws which would otherwise be unable to fit within the cutting zone 15.

In the expanded configuration the nested insert back wall 87 sits against the expandable back wall part 20. This enables support of the expandable back wall part 20 in the expanded configuration and minimises the risk of the expandable back wall part 20 inadvertently collapsing to the non-expanded configuration.

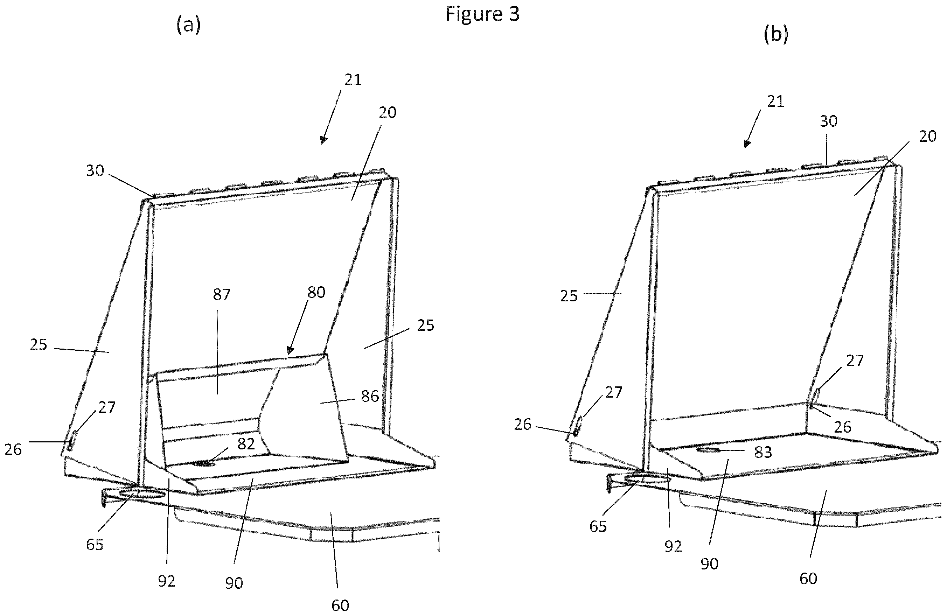

Guide members coordinate the movement between the expanded and the non-expanded configuration. Each side of the expandable work-surface sidewalls 92 couples to a pin 26. The pins 26 slide within slots 27 formed at each side the expandable sidewall parts 25 and act as guide members. In this embodiment each pin is a male-female bolt. The pins 26 and the slots 27 also acts as stops to limit the movement of the expandable portion 21. Figures 3a and 3b illustrate the pins 26 and slots 27 in more detail in the expanded configuration of the expandable portion 21.

Figure 3a illustrates the expandable portion 21 and the nested insert 80 in the expanded configuration and Figure 3b illustrates the expandable portion 21 without a nested insert in the expanded configuration. When the expandable portion 21 rests at the non-expanded configuration, the pins 26 sit at the top part of the slot 27 and the expandable work-surface part 90 is perpendicular to the expandable back wall part 20. When the expandable portion 21 rests at the expanded configurations and the back wall 20 is inclined, the pins 26 sit at the bottom part of the slot 27 as illustrated in Figures 3a and 3b.

The work-surface 60 has an aperture 65 or socket for plugging in tools and equipment providing easy access. Optionally, an air extraction unit is placed within the security cabinet 68 and is connected through cabling passing through the aperture 65 with an extraction duct (not shown) sitting around the modesty panel 55. The extraction duct creates a clear air curtain in front of the user of the workstation.

The expandable work-surface part 90 comprises a work-surface swarf disposal aperture 83. The nested insert swarf disposal aperture 82 is located in the work-surface swarf disposal aperture 83.

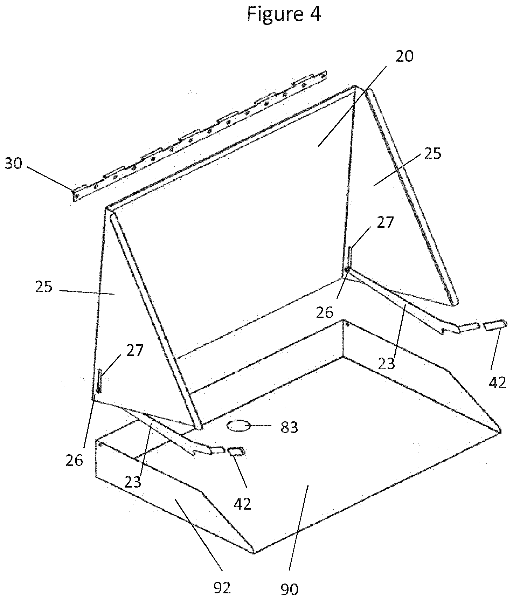

Figure 4 is an exploded view of the expandable portion 21 without the nested insert 80. The expandable portion 21 has engagement levers 23 engaged through the pins 27 with each of the expandable sidewall parts 25. Each of the levers 23 has handles 42 to enable the user to control lever movement. When the user pushes the handle 42 downwards towards the expandable work-surface part 90 or backwards towards the expandable back wall part 20, the expandable portion 21 moves to the expanded configuration. When the user pulls the handle 42 in the opposite direction (i.e. forwards and/or upwards) the expandable portion 21 moves to the non-expanded configuration.

Figures 5 and 6 illustrate the supporting arm 71 for positioning and handling workpieces. The supporting arm 71 comprises different supporting tools, such as the roller 74 and a revolving member 61. The supporting arm 71 has different configurations to enable various support arrangements and handling of different workpieces.

The supporting arm 71 has a rotatable axis 99 and a pair of roller axis ends 97 arranged at each end of the axis 99. The roller 74 and the revolving member 61 are rotatable around the axis 99. The roller 74 is an open-ended spring axle roller. The revolving member 61 has a rim 63, a supporting base 66 and a pair of lugs 98. The lugs 98 enable rotatable connection of the revolving member 61 to the axis ends 97. The supporting arm 71 comprises stop pins 96 arranged at each side of the arm to fix the position of the revolving member 61. Each of the lugs 98 has a first lock slot 94 and a second lock slot 95. When none of the slots 94 or 95 are engaged with the stop pins 96, the revolving member leans towards the second tube 72.

Figure 5b shows the arm 71 at a sliding configuration. A square tube workpiece 93 is slidably supported by the roller 74 and the rim 63. In this configuration, the user can slide the square tube workpiece 93 along its longitudinal axis using the roller 74. Rotation of the roller 74 around the axis 99, allows a sliding movement of the square tube workpiece 93, but stops the square tube workpiece 93 from moving in directions that could cause problems during the cutting operation.

In Figures 6a and 6b the square tube workpiece 93 is supported by the revolving member 61. In Figure 6a, each of the first slots 94 are engaged by stop pins 96 and the supporting arm 71 is configured at a resting configuration. In this configuration, the square tube workpiece 93 is supported by a friction surface 69. The user can move the square tube workpiece 93 along its longitudinal axis, however due to the friction between the friction surface 69 and the square tube workpiece 93 more force should be applied by the user to enable such movement, compared to the sliding configuration presented in Figure 5b.

In Figure 6b each of the second slots 95 engage with the stop pins 96 and the supporting arm 71 is at a blocking configuration. Here, movement along the square tube workpiece 93 longitudinal axis is restricted by the blade 67. The supporting base 66 also supports one end of the square tube workpiece 93. This configuration is useful during the cutting operation since the user needs to keep at least one end of the square tube workpiece fixed in place to facilitate cutting.

In Figure 6c a cylindrical workpiece 91 is supported by the revolving member 61. Each of the second slots 95 are engaged with stop pins 96 and the supporting arm 71 is configured at a second resting configuration. The supporting shoulder 78 or notch of the blade 69 accommodates the cylindrical shape of the cylindrical workpiece 91, which would be challenging to support in any of the previous supporting arm configurations. This configuration allows movement of the cylindrical workpiece 91 along its longitudinal axis, but at the same time restricts the cylindrical workpiece 91 rolling in different directions.

Although the invention has been described above with reference to one or more preferred embodiments, it will be appreciated that various changes or modifications may be made without departing from the scope of the invention as defined in the appended claims.

## Claims

1. A mobile workstation (100) comprising:
a work-surface (60) for mounting a cutting tool;
a cabinet (11) at least partially surrounding the work-surface and having a back wall (10) so as to define a cutting zone (15) having a depth (D); and
**characterised in that** it comprises an expandable portion (21) having an expanded and a non-expanded configuration and comprising at least part of the back wall (20) and at least part of the work-surface (90), the expandable portion is movable so as to vary the depth of the cutting zone.

2. A workstation according to claim 1, wherein the expandable part of the back wall (20) and the expandable part of the work-surface (90) are coupled to move together.

3. A workstation according to claim 1 or claim 2, wherein the expandable part of the work-surface (90) is arranged in sliding configuration with the non-expandable part of the work-surface.

4. A workstation according to any of the preceding claims, wherein the expandable part of the back wall (20) is pivotably coupled to the non-expandable part of the back wall.

5. A workstation according to any of the preceding claims, wherein the expandable portion includes sidewalls (25) connecting between the expandable part of the back wall (20) and the expandable part of the work-surface (90).

6. A workstation according to any of the preceding claims, further comprising one or more stop members (26, 27) to limit the movement of the expandable portion.

7. A workstation according to any of the preceding claims, wherein the expandable portion includes one or more guide members (26, 27) to coordinate movement of the expandable part of the back wall (20) and the expandable part of the work-surface (90) between the expanded and non-expanded configurations.

8. A workstation according to claim 7, wherein the guide member comprises a pin (26) movable within a slot (27).

9. A workstation according to any of the preceding claims, wherein the expandable portion further comprises a nested insert (80) having an opening (88) towards the cutting zone (15).

10. A workstation according to claim 9, wherein the nested insert (80) has an inclined back wall (87) which sits against the expandable part of the back wall (20) when in the expanded configuration and which forms a gap with the expandable part of the back wall when in the non-expanded configuration.

11. A workstation according to claim 9 or claim 10, wherein the nested insert (80) has a base (85) which rests upon the expandable part of the work-surface (90).

12. A workstation according to any of the preceding claims, wherein the expandable portion (21) further comprises a swarf disposal aperture (83).

13. A workstation according to claim 12 when dependent on claim 9, wherein the nested insert (80) further comprises a second swarf disposal aperture (82) which locates in the swarf disposal aperture (83) in the expandable part of the work-surface (90).

14. A workstation according to any preceding claim, wherein the depth (D) of the cutting zone (15) increases by up to 30% between the non-expanded and the expanded configurations.

15. A workstation according to any preceding claim, further comprising lockable castor wheels (77).

16. A workstation according to any of the preceding claims, wherein the workstation is a cutting-tool workstation.

## Patentansprüche

1. Mobile Arbeitsstation (100), umfassend:
eine Arbeitsfläche (60) zum Anbringen eines Schneidwerkzeugs;
einen Schrank (11), der die Arbeitsfläche zumindest teilweise umgibt und eine Rückwand (10) aufweist, um eine Schneidzone (15) mit einer Tiefe (D) zu definieren;
und
**dadurch gekennzeichnet, dass** sie umfasst:
einen erweiterbaren Bereich (21) mit einer erweiterten und einer nicht erweiterten Konfiguration, der mindestens einen Teil der Rückwand (20) und mindestens einen Teil der Arbeitsfläche (90) umfasst, wobei der erweiterbare Bereich so beweglich ist, dass er die Tiefe der Schneidzone variiert.

2. Arbeitsstation nach Anspruch 1, wobei der erweiterbare Teil der Rückwand (20) und der erweiterbare Teil der Arbeitsfläche (90) so gekoppelt sind, dass sie sich zusammen bewegen.

3. Arbeitsstation nach Anspruch 1 oder 2, wobei der erweiterbare Teil der Arbeitsfläche (90) mit dem nicht erweiterbaren Teil der Arbeitsfläche in einer Gleitkonfiguration angeordnet ist.

4. Arbeitsstation nach einem der vorhergehenden Ansprüche, wobei der erweiterbare Teil der Rückwand (20) schwenkbar mit dem nicht erweiterbaren Teil der Rückwand verbunden ist.

5. Arbeitsstation nach einem der vorhergehenden Ansprüche, wobei der erweiterbare Bereich Seitenwände (25) aufweist, die den erweiterbaren Teil der Rückwand (20) und den erweiterbaren Teil der Arbeitsfläche (90) verbinden.

6. Arbeitsstation nach einem der vorhergehenden Ansprüche, des Weiteren umfassend eine oder mehrere Anschlagelemente (26, 27) zum Begrenzen der Bewegung des erweiterbaren Bereichs.

7. Arbeitsstation nach einem der vorhergehenden Ansprüche, wobei der erweiterbare Bereich ein oder mehrere Führungselemente (26, 27) enthält, um die Bewegung des erweiterbaren Teils der Rückwand (20) und des erweiterbaren Teils der Arbeitsfläche (90) zwischen den erweiterten und der nicht erweiterten Konfigurationen zu koordinieren.

8. Arbeitsstation nach Anspruch 7, wobei das Führungselement einen Stift (26) aufweist, der in einem Schlitz (27) bewegbar ist.

9. Arbeitsstation nach einem der vorhergehenden Ansprüche, wobei der erweiterbare Bereich ferner einen eingeschachtelten Einsatz (80) mit einer Öffnung (88) in Richtung der Schneidzone (15) aufweist.

10. Arbeitsstation nach Anspruch 9, wobei der eingeschachtelte Einsatz (80) eine geneigte Rückwand (87) aufweist, die in der erweiterten Konfiguration an dem erweiterten Teil der Rückwand (20) anliegt und in der nicht erweiterten Konfiguration mit dem erweiterten Teil der Rückwand eine Lücke bildet.

11. Arbeitsstation nach Anspruch 9 oder 10, wobei der eingeschachtelte Einsatz (80) eine Basis (85) aufweist, die auf dem erweiterbaren Teil der Arbeitsfläche (90) aufliegt.

12. Arbeitsstation nach einem der vorhergehenden Ansprüche, wobei der erweiterbare Bereich (21) ferner eine Späneentsorgungsöffnung (83) aufweist.

13. Arbeitsstation nach Anspruch 12, wenn abhängig von Anspruch 9, wobei der eingeschachtelte Einsatz (80) ferner eine zweite Späneentsorgungsöffnung (82) aufweist, die in der Späneentsorgungsöffnung (83) in dem erweiterbaren Teil der Arbeitsfläche (90) angeordnet ist.

14. Arbeitsstation nach einem der vorhergehenden Ansprüche, wobei die Tiefe (D) der Schneidzone (15) zwischen der nicht erweiterten und der erweiterten Konfiguration um bis zu 30% zunimmt.

15. Arbeitsstation nach einem der vorhergehenden Ansprüche, ferner mit feststellbaren Lenkrollen (77).

16. Arbeitsstation nach einem der vorhergehenden Ansprüche, wobei die Arbeitsstation eine Schneidwerkzeugarbeitsstation ist.

## Revendications

1. Poste de travail mobile (100) comprenant :
une surface de travail (60) pour monter un outil de coupe ;
une armoire (11) entourant au moins partiellement la surface de travail et ayant une paroi arrière (10) de manière à définir une zone de coupe (15) ayant une profondeur (D) ; et
**caractérisé en ce qu'**il comprend une partie extensible (21) ayant une configuration étendue et non étendue et comprenant au moins partiellement la paroi arrière (20) et au moins partiellement la surface de travail (90), la partie extensible étant mobile de façon à varier la profondeur de la zone de coupe.

2. Poste de travail selon la revendication 1, dans lequel la partie extensible de la paroi arrière (20) et la partie extensible de la surface de travail (90) sont couplées pour se déplacer ensemble.

3. Poste de travail selon la revendication 1 ou la revendication 2, dans lequel la partie extensible de la surface de travail (90) est disposée en configuration coulissante avec la partie non extensible de la surface de travail.

4. Poste de travail selon l'une quelconque des revendications précédentes, dans lequel la partie extensible de la paroi arrière (20) est couplée de manière pivotante à la partie non extensible de la paroi arrière.

5. Poste de travail selon l'une quelconque des revendications précédentes, dans lequel la partie extensible comprend des parois latérales (25) établissant une liaison entre la partie extensible de la paroi arrière (20) et la partie extensible de la surface de travail (90).

6. Poste de travail selon l'une quelconque des revendications précédentes, comprenant en outre un ou plusieurs éléments d'arrêt (26, 27) pour limiter le mouvement de la partie extensible.

7. Poste de travail selon l'une quelconque des revendications précédentes, dans lequel la partie extensible comprend un ou plusieurs éléments de guidage (26, 27) pour coordonner le mouvement de la partie extensible de la paroi arrière (20) et de la partie extensible de la surface de travail (90) entre les configurations étendue et non étendue.

8. Poste de travail selon la revendication 7, dans lequel l'élément de guidage comprend une broche (26) mobile dans une fente (27).

9. Poste de travail selon l'une quelconque des revendications précédentes, dans lequel la partie extensible comprend en outre une pièce rapportée emboîtée (80) ayant une ouverture (88) vers la zone de coupe (15).

10. Poste de travail selon la revendication 9, dans lequel la pièce rapportée emboîtée (80) présente une paroi arrière inclinée (87) qui s'appuie contre la partie extensible de la paroi arrière (20) dans la configuration étendue et qui forme un espace avec la partie extensible de la paroi arrière dans la configuration non étendue.

11. Poste de travail selon la revendication 9 ou la revendication 10, dans lequel la pièce rapportée emboîtée (80) présente une base (85) qui repose sur la partie extensible de la surface de travail (90).

12. Poste de travail selon l'une quelconque des revendications précédentes, dans lequel la partie extensible (21) comprend en outre une ouverture d'évacuation des copeaux (83).

13. Poste de travail selon la revendication 12 lorsqu'elle dépend de la revendication 9, dans lequel la pièce rapportée emboîtée (80) comprend en outre une deuxième ouverture d'évacuation des copeaux (82) qui se situe dans l'ouverture d'évacuation des copeaux (83) dans la partie extensible de la surface de travail (90).

14. Poste de travail selon l'une quelconque des revendications précédentes, dans lequel la profondeur (D) de la zone de coupe (15) augmente jusqu'à 30 % entre les configurations non étendue et étendue.

15. Poste de travail selon toute revendication précédente, comprenant en outre des roues pivotantes verrouillables (77).

16. Poste de travail selon l'une quelconque des revendications précédentes, dans lequel le poste de travail est un poste de travail pour outil de coupe.
